Europäisches Patentamt

European Patent Office

Office européen des brevets

(19)

(11) Veröffentlichungsnummer: **0 302 294 B1**

(12) **EUROPÄISCHE PATENTSCHRIFT**

(45) Veröffentlichungstag der Patentschrift: **29.07.92**

(51) Int. Cl.⁵: **H01G 4/30**, H01C 7/10,
H01C 1/14

(21) Anmeldenummer: **88111547.1**

(22) Anmeldetag: **18.07.88**

(54) **Füllschichtbauteil mit einem gesinterten, monolithischen Keramikkörper und Verfahren zu dessen Herstellung.**

(30) Priorität: **31.07.87 DE 3725453**

(43) Veröffentlichungstag der Anmeldung:
**08.02.89 Patentblatt 89/06**

(45) Bekanntmachung des Hinweises auf die
Patenterteilung:
**29.07.92 Patentblatt 92/31**

(84) Benannte Vertragsstaaten:
**AT BE CH DE ES FR GB IT LI**

(56) Entgegenhaltungen:
**EP-A- 0 258 670**
**FR-A- 2 193 795**
**US-A- 4 189 760**

(73) Patentinhaber: **SIEMENS AKTIENGESELL-
SCHAFT
Wittelsbacherplatz 2
W-8000 München 2(DE)**

(72) Erfinder: **Kippenberg, Horst, Dr.
Sudetenring 24
W-8522 Herzogenaurach(DE)**
Erfinder: **Otto, Klaus, Dipl.-Chem.
Klingenfeldstrasse 54
W-8500 Nürnberg(DE)**
Erfinder: **Moser, Thomas, Dipl.-Ing.
Schlesienstrasse 35
W-8563 Schnaittach(DE)**

EP 0 302 294 B1

## Beschreibung

Die Erfindung betrifft ein Füllschichtbauteil, insbesondere elektrischer Vielschichtkondensator, -kaltleiter oder -varistor, mit den Merkmalen:

a) ein gesinterter, quaderförmiger Körper hat Schichten aus keramischem Material mit dielektrischen oder halbleitenden Eigenschaften,

b) zwischen den Schichten befinden sich Bereiche mit Metallfüllungen, die alternierend von Lage zu Lage zu einander gegenüberliegenden Stirnflächen und wenigstens teilweise zu den angrenzenden Seitenflächen des quaderförmigen Körpers ausgedehnt sind und mit Keramikpartikeln als Stützelemente durchsetzt sind,

c) die Metallfüllungen bestehen aus einem Metall oder einer Metallegierung, dessen bzw. deren Schmelztemperatur erheblich niedriger ist, als die für die Sinterung des Keramikkörpers erforderliche Temperatur,

d) an den Stirnflächen und auch auf die Seitenflächen herumreichend sind Kontaktierungen vorhanden, die jeweils die Metallfüllungen miteinander elektrisch leitend verbinden und selbst oder durch eine weitere Metallauflage lötfähig sind.

Die Erfindung betrifft ferner ein Verfahren zur Herstellung eines solchen Füllschichtbauteiles mit den Verfahrensschritten:

a) es werden 0,03 bis 0,1 mm dicke Schichten, deren Breite und Länge je ein Vielfaches der Breite und Länge der späteren Keramikkörper betragen, aus einer Suspension, die dielektrisches oder halbleitendes Material in feiner Verteilung enthält, hergestellt und getrocknet,

b) auf diese Schichten wird in Form von abgegrenzten Bereichen in bestimmter Anordnung und in einer Dicke von 0,005 bis 0,02 mm eine Suspension aufgetragen (z.B. aufgedruckt) und eingetrocknet, die beim späteren Sintern gemäß Verfahrensschritt e) entweichende Bestandteile (Oxide, Karbonate, Kohlenstoff oder Ruß) und Keramikpartikel enthält, die beim späteren Sintern gemäß Verfahrensschritt e) im wesentlichen unverändert bleiben,

c) aus einer Vielzahl solcher Schichten wird ein Stapel gebildet, in welchem sich die Suspensionsbereiche in großen Teilbereichen überlappen und der gegebenenfalls oberhalb und/ oder unterhalb mit von Suspensionsbereichen freien, als Decklagen dienenden Suspensionsschichten versehen ist,

d) der Stapel wird durch einen Preßvorgang verdichtet und anschließend längs von Schnittlinien in Längs- und in Querrichtung zerteilt,

e) der verdichtete Stapel oder die daraus entstandenen Einzelkörper werden mit entsprechendem Aufheiz- und Abkühlverlauf bei Temperaturen von 1000°C oder höher gesintert,

f) die gesinterten Keramikkörper, die Hohlräume mit offenen Abschnitten wenigstens an den Seitenflächen aufweisen werden an den Stirnflächen mit Kontaktierungen versehen,

g) die mit Kontaktierungen versehenen Keramikkörper werden in einem Autoklaven, gegebenenfalls nach vorheriger Evakuierung, in eine Metallschmelze getaucht, welche anschließend durch Überdruck in die Hohlräume des Keramikkörpers eingepreßt wird, und werden anschließend oberhalb der Metallschmelze abgekühlt, wobei der Überdruck auf Normaldruck reduziert ist, oder

die mit Kontaktierungen versehenen Keramikkörper werden in einer Zentrifuge mit der Metallschmelze beaufschlagt, wobei das Metall durch Einwirkung der Zentrifugalkräfte in die Hohlräume der Keramikkörper gepreßt wird.

Elektrische Vielschichtkondensatoren mit einem gesinterten Keramikkörper aus dielektrischem Material, auf die sich die vorliegende Erfindung vorzugsweise bezieht und die in der Praxis häufig als monolitische Kondensatoren bezeichnet werden, sind bereits in vielfacher Weise in der Patentliteratur beschrieben worden. Von dieser vielfältigen Patentliteratur kommen der vorliegenden Erfindung die US-A-3 679 950, die US-A-4 071 880, die US-A-4 189 760 und die US-A-4 658 328, welche letztere der DE-A-36 12 084 entspricht, am nächsten.

In der US-A-3 679 950 ist ein keramischer Vielschichtkondensator beschrieben, der die Merkmale des eingangs angegebenen Vielschichtkondensators aufweist, mit der Ausnahme, daß die Bereiche mit den Metallfüllungen alternierend von Lage zu Lage nur zu einander gegenüberliegenden Stirnflächen, nicht aber zu den angrenzenden Seitenflächen ausgedehnt sind. Insbesondere in der US-A-4 189 760 werden aber beide Möglichkeiten als äquivalente Alternativen angegeben, so daß sie gegenbenenfalls zu kombinieren sind.

In letzterern USA-Patentschriften sind auch Verfahren zur Herstellung von elektrischen Vielschichtkondensatoren beschrieben, bei denen die eingangs angegebenen Verfahrensschritte verwirklicht sind, jedoch mit der Maßgabe, daß die gemäß Verfahrensschritt b) aufzutragenden Suspensionsbereiche derart ausgewählt sind, daß letztlich nur jeweils zu einer Seite offene Hohlräume entstehen. Da im fertigen Stapel aus mehreren derart vorbereiteten Schichten die Suspensionsbereiche praktisch rundherum verschlossen sind, ist es erforderlich, daß bereits dieser Stapel längs von senkrecht zueinander stehenden Trennlinien in Einzelkörper aufgetrennt wird, damit beim nachfolgenden Sintervorgang, für den ein entsprechendes Aufheiz-, Sinter- und Abkühlschema erforderlich ist, das Entweichen und/ oder das Zersetzen der zu entfernenden Bestandteile aus den Suspensionsbereichen zur Bildung der Hohlräume erfolgen kann.

Zur Herstellung der Kondensatorelektroden innerhalb der Hohlräume des monolithischen Keramikkörpers wird - neben anderen Möglichkeiten - niedrig schmelzendes Metall oder niedrig schmelzende Metallegierungen, beispielsweise Blei oder eine Legierung aus 50 % Bi, 25 % Pb, 12,5 % Sn und 12,5 % Cd angegeben. Alle diese Legierungen haben Schmelztemperaturen, die beträchtlich niedriger sind, als die für die Sinterung des monolithischen Keramikkörpers erforderliche Sintertemperatur von bis zu 1325°C. Außerdem benetzen diese Legierungen die Oberfläche der Keramikkörper, insbesondere in den Hohlräumen, nur sehr schlecht oder gar nicht.

Die Kontaktierungen, meist aus Silber bestehend, werden an den gegenüberliegenden Stirnflächen bei dem in der US-PS 3 679 950 beschriebenen Vielschichtkondensator stets nach dem Einpressen des niedrig schmelzenden flüssigen Metalles und Abkühlen des getränkten Keramikkörpers aufgebracht.

In der US-A-4 071 880 ist praktisch der gleiche elektrische Vielschichtkondensator mit einem gesinterten, monolithischen Keramikkörper beschrieben, für den insoweit die gleichen Überlegungen gelten, wie für den aus der US-A-3 679 950 bekannten Vielschichtkondensator. In der US-A-4 071 880 ist darüberhinaus auch die Möglichkeit ausführlich beschrieben, die Kontaktierungen auf die Stirnflächen des monolithischen Keramikkörpers vor dem Tränken desselben aufzubringen, wofür diese Kontaktierungen porös ausgebildet sein müssen.

Der in der US-A-4 071 880 beschriebene Vielschichtkondensator besteht aus einer Mehrzahl von wechselweise aufeinanderliegenden Keramikschichten und inneren Elektroden sowie äußeren Doppelschichtelektroden (Kontaktierungen), die in vorbestimmter Weise mit den inneren Elektroden verbunden sind. Beispielsweise liegt eine lamellenartige Elektrodenstruktur vor.

Bei der Herstellung eines solchen Vielschichtkondensators werden zunächst unbehandelte bzw. ungesinterte Keramikplättchen (Suspensionsschichten) mit Hilfe eines Abstreif- bzw. Rakelverfahrens unter Verwendung einer Abstreifklinge hergestellt. Diese Keramikplättchen besitzen eine Dicke von 0,05 bis 0,1 mm. Auf die Oberflächen der Keramikplättchen wird dann eine Kohlen- bzw. Kohlenstoffpaste aufgetragen bzw. aufgedruckt, die aus einer Mischung von Kohle- bzw. Kohlenstoffpulver und Keramikpulver besteht. Diese Paste (Suspension) wird in abgegrenzten Bereichen aufgetragen, und zwar so, daß die Hohlräume im fertigen Keramikkörper alternierend nur zu gegenüberliegenden Stirnflächen offen sind. Mehrere solcher bedruckter Keramikplättchen werden abwechselnd aufeinanderliegend angeordnet und durch Anwendung einer Druckkraft miteinander zur Bildung einer integrierten Struktur verbunden. Aus dieser integrierten Struktur werden durch Auftrennung längs von senkrecht aufeinanderstehenden Schnittlinien Einzelkörper erzeugt, die bei einer Temperatur oberhalb von 1000°C gebrannt werden, um die keramischen Plättchen zu sintern und um das Kohle- bzw. Kohlenstoffpulver innerhalb der aufgedruckten Kohlenstoffpaste zu beseitigen. Dadurch werden poröse Zwischenschichten mit Keramikpulver in Bereichen erzeugt, in denen die inneren Elektroden gebildet werden sollen. Im Anschluß daran werden die porösen äußeren Elektroden als Kontaktierungen an die gesinterten Einzelkörper angebracht. Dies kann dort wie auch bei der vorliegenden Erfindung beispielsweise durch Verfahren erfolgen, die in der US-A-3 683 849, der US-A-4 526 129 und der US-A-4 561 954, in der GB-A-2 106 714, der DE-C-27 22 140 oder in der DE-A-36 38 286 beschrieben sind.

Die Kontaktierungen werden beispielsweise durch Einbrennen einer Paste erhalten, die hauptsächlich aus Nickel besteht, das mit einer Glasurmasse vermischt ist. Der auf diese Weise gebildete Keramikkörper wird dann in einen Druckbehälter eingeführt und in geschmolzenes Blei, das als Leitungsmaterial für die Kondensatorbelegungen dient, bei einer Temperatur der Schmelze von etwa 330 bis 360°C und im dekomprimierten Zustand eingetaucht. Anschließend wird der Druck auf etwa 10 bar (atm) erhöht, so daß geschmolzenes Blei unter Druck in die Hohlräume des Keramikkörpers eindringt, und zwar ausschließlich durch die porösen äußeren Elektroden hindurch. Der Keramikkörper wird dann aus dem geschmolzenen Blei herausgezogen, abgekühlt und wiederum dem Normaldruck ausgesetzt, so daß sich die inneren Elektroden aus Blei bilden. Im Anschluß daran werden auf die äußeren Elektroden zusätzlich Schichten aufgetragen, die eine gute Lötbarkeit aufweisen.

Zur Herstellung des beschriebenen Vielschichtkondensators müssen die auf den monolithischen Keramikkörper aufgebrachten äußeren Elektroden porös sein und so ausgebildet bzw. hergestellt werden, daß zunächst ein Eintritt des flüssigen Bleis für die inneren Elektroden möglich ist, daß sie andererseits aber verhindern, daß das Blei wieder aus den Hohlräumen des Keramikkörpers herausfließt, wenn dieser aus dem geschmolzenen Blei herausgezogen wird, weil - wie ausdrücklich in Spalte 10, Zeilen 51 bis 58 der US-A-4 071 880 empfohlen wird - die einzupressende Metallschmelze den Keramikkörper nicht leicht benetzen darf. Mit anderen Worten bilden die porösen äußeren Elektroden in bestimmten Zuständen Durchdringungsbarrieren. Die porösen äußeren Elektroden bestehen hauptsächlich aus Nickel, das mit Blei nicht reagiert. Die Haftfestigkeit an den Stirnflächen des Keramikkörper hängt von der Menge der Glasurmasse innerhalb der Paste ab, wobei die Haftstärke mit steigender Menge an Glasurmasse verbessert wird. In diesem Fall jedoch vermindert sich die Anzahl der Poren der äußeren Elektroden, so daß die Durchdringung von Blei erschwert wird, während Glaskomponenten die Zwischenschichten blockieren und die Zufuhr von Blei beeinträchtigen. Die elektrostatische Kapazität kann daher nicht in gewünschter Weise eingestellt werden, selbst wenn der Keramikbaustein innerhalb der Schmelze einem relativ hohem Druck ausgesetzt wird.

In der US-A-4 658 328 (entsprechend der DE-A-36 12 084) ist zur Lösung der beschriebenen Probleme vorgeschlagen, die Hohlräume im Inneren des Keramikkörpers so zu gestalten, daß sie sowohl an den einander gegenüberliegenden Stirnflächen als auch zu einem geringen Teil an den angrenzenden Seitenflächen offen sind, damit das geschmolzene Metall beim Injektionsprozeß nicht nur durch die porösen Kontaktierungen hindurch, sondern auch durch die zu einem geringen Teil an den Seitenflächen offenen und von Kontaktierungen freien Teile der Hohlräume eindringen kann, dann aber dennoch nicht aus den Hohlräumen wieder ausfließen kann.

Der in der US-A-4 658 238 beschriebene Vielschichtkondensator weist insofern alle Merkmale des eingangs angegebenen Vielschichtkondensators auf. In diesem Dokument ist auch ein Verfahren beschrieben, das die für das Herstellungsverfahren oben angegebenen Verfahrensschritte umfaßt, jedoch mit der Maßgabe, daß die an den Stirnflächen angebrachten Kontaktierungen nach wie vor porös sind.

In den nicht vorveröffentlichten deutschen Offenlegungsschriften DE-A-36 27 936 und DE-A-36-27 929 sind Vielschichtkondensatoren mit einem gesinterten monolithischen Keramikkörper und Verfahren zu ihrer Herstellung beschrieben, die ebenfalls die Merkmale des eingangs angegebenen Vielschichtkondensators bzw. des Verfahrens zu seiner Herstellung aufweisen. In diesen Offenlegungsschriften wird vorgeschlagen, als niedrig schmelzendes Metall für die Kondensatorbelegungen ein solches zu verwenden, das im Gegensatz zu den für diese Zwecke bisher bekannten Metallen oder Metalllegierungen die Oberflächenteile innerhalb der Schichten des Keramikkörpers benetzt. Für diese Metalle bzw. Legierungen sind eine Reihe von Vorschlägen gemacht, die auch als für die vorliegende Erfindung geeignete Metalle oder Metallegierungen gelten.

Das Einpressen dieser Metalle in die Keramikkörper erfolgt gemäß letzteren Offenlegungsschriften nach wie vor durch die jeweils nur zu einer Seite gerichteten Öffnungen der Hohlräume, die entweder noch frei von einer Kontaktierung sind oder mit einer porösen Kontaktierung bedeckt sein können. Im ersten Fall werden die Kontaktierungen nachträglich aufgebracht.

Die Verwendung eines benetzenden Metalles hat den Vorteil, daß dieses Metall aus den Hohlräumen des Keramikkörpers beim Herausnehmen aus der Metallschmelze nicht mehr herausfließt und daß eine Anbindung der Metallfüllungen an die Kontaktierungen gewährleistet ist. Gleichermaßen wird dadurch die Vereinzelung der Teile nach dem Tränken erleichtert.

Beim Einpressen der niedrig schmelzenden Metallegierung durch poröse Kontaktierungen hindurch in die Hohlräume im Keramikkörper, die nur zu einer Seite hin offen sind, treten die bereits oben beschriebenen Probleme auf, die sich auch durch die Verwendung gut benetzender Metalle oder Metallegierungen nicht beseitigen lassen, nämlich die Gefahr der Verstopfung der Poren in der porösen Schicht und damit eine unzureichende Ausfüllung der Hohlräume. Beim Anbringen der Kontaktierungen nach dem Einpressen der Metallschmelze und Abkühlen der gefüllten Keramikkörper können wiederum Probleme auftreten, die darin bestehen, daß die Anbindung der inneren Elektroden im Inneren des Keramikkörpers an die äußeren Elektroden auf den Stirnflächen unzureichend sein kann.

Keramische Kaltleiter in Schichtbauweise sind beispielsweise in der GB-B-932 558 und keramische Vielschichtvaristoren sind beispielsweise in der US-A-4 675 644, entsprechend EP-A-0 189 087, beschrieben.

Der vorliegenden Erfindung liegt die Aufgabe zugrunde, ein Füllschichtbauteil und ein Verfahren zu seiner Herstellung anzugeben, bei denen gewährleistet ist, daß einerseits eine vollständige Füllung der porösen Bereiche im Keramikkörper mit Metall und eine gute Anbindung, d.h. eine Verbindung mit geringem elektrischen Übergangswiderstand, zwischen den Metallfüllungen im Inneren des Keramikkörpers und den Kontaktierungen erreicht werden und daß andererseits eine ausreichende Stabilität des Bauteiles während des Herstellungsprozesses, insbesondere beim Druck- oder Schleudertränken, sichergestellt ist.

Zur Lösung dieser Aufgabe ist das Füllschichtbauteil der eingangs genannten Art erfindungsgemäß gekennzeichnet durch die weiteren Merkmale:

e) Die Bereiche mit den Metallfüllungen sind nur im mittleren Abschnitt der Seitenflächen des quaderförmigen Körpers bis nach außen ausgedehnt, so daß die Kontaktierungen an den Seitenflächen die Metallfüllungen nicht berühren,

f) die Metallfüllungen bestehen aus einem Metall oder einer Metallegierung mit der Eigenschaft, im flüssigen Zustand die Flächen der Keramikschichten in den Hohlräumen zu benetzen.

Bei der Erfindung sind die offenen Abschnitte der Bereiche mit den Metallfüllungen in aufeinanderfolgenden Schichten vorzugsweise von Lage zu Lage jeweils abwechselnd zu den Seitenflächen angeordnet. Es können jeweils mehrere Abschnitte nebeneinanderliegen, die durch massive Keramikbarrieren voneinander getrennt sind. Die Summe der offenen Abschnitte kann zwischen 10 und 80 % der Gesamtlänge der Seitenflächen betragen.

Für die Metallfüllungen können unterschiedliche Legierungen verwendet werden, so beispielsweise eine Blei-Indium-Legierung mit einem Indiumanteil von gleich oder größer als 0,5 Gew-%, insbesondere 2,5 bis 20 Gew-%, eine Blei-Silber-Indium-Legierung mit wenigstens 0,5 Gew-% Indium und insgesamt bis 20 Gew-% Silber und Indium, oder eine Blei-Zinn-Indium-Legierung entsprechender Konzentration, ferner Kupfer-Indium- oder Silber-Indium-Legierungen.

Die Kontaktierungen bestehen vorzugsweise aus Nickel oder Legierungen mit einem hohen Nickelanteil oder aus Silber oder Legierungen mit einem hohen Silberanteil. Dabei können die Kontaktierungen durch eine Doppelschicht gebildet sein, deren innere Schicht an die Metallfüllung in den Hohlräumen anbindet und deren äußere Schicht ablegierungsbeständig ist. Die Kontaktierungen können für das Tränkmetall durchlässig oder undurchlässig sein.

Falls erforderlich, ist es vorteilhaft, wenigstens die von Kontaktierungen freien Bereiche der Seitenflächen mit elektrisch isolierendem und feuchtedichtem Material, z.B. Kunststoff, zu bedecken, wie dies auch schon in der US-A-4 658 328 bzw. der DE-A-36 12 084 beschrieben ist.

Das eingangs angegebenen Verfahren zur Herstellung des Füllschichtbauteils zur Verwendung als elektrisches Bauelement ist erfindungsgemäß gekennzeichnet durch die Verfahrensmerkmale:

- Im Verfahrensschritt f) werden die Kontaktierungen auf insbesondere Nickel-oder Silberbasis durch Bedrucken, z.B. Siebdruck, durch chemische oder galvanische Abscheidung, mittels Tauchverfahren, mittels Metallspritzverfahren oder durch Oberflächenbeschichtungsverfahren aus der Gasphase, z.B. Sputtern, aufgetragen,
- im Verfahrensschritt g) erfolgt das Einpressen eines flüssigen Metalles, das die Flächen der Keramikschichten in den Hohlräumen benetzt, vorwiegend durch die offenen Abschnitte, an den Seitenflächen des Keramikkörpers, wodurch Bereiche mit Metallfüllung gebildet werden.

Durch die Erfindung werden folgende Vorteile erzielt:

- Es hat sich überraschenderweise gezeigt, daß die Verwendung von Metallen oder Metallegierungen, welche die Oberflächen in den Hohlräumen der Keramikschichten des Keramikkörpers benetzen, im Normalfall an den Seitenflächen durch Kontraktion des Metalles zu von Metall freien Randbereichen führt. Sollte dies wider Erwarten nicht erreicht sein, so ist insbesondere durch die Tränkung von jeweils unterschiedlichen Seiten keine Gefahr des Überschlages zwischen den einzelnen gegenpoligen inneren Elektroden an den Seitenflächen gegeben. Die Kontraktion des eingepreßten Metalles kann nicht an den Stellen, an denen dieses Metall mit den vor dem Einpressen aufgebrachten Metall der Kontaktierungen sich verbunden hat, erfolgen, da hier bereits eine metallurgische Reaktion erfolgt ist. Im Bedarfsfalle können zur Erhöhung der Isolation die freien Oberflächenteile der Seitenflächen oder auch der gesamte vorzugsweise gebildete Vielschichtkondensator mit einer Umhüllung aus an sich bekanntem Isoliermaterial versehen werden. An unerwünschten Stellen eventuell vorhandenes Einpreßmetall kann in einfacher Weise chemisch oder mechanisch entfernt werden.
- Es werden die Füllwege kleiner, weil das einzupressende Metall auch von den Seitenflächen her in den Keramikkörper eindringen kann.
- Die Füllung mit Metall wird in kürzeren Zeiten ermöglicht.
- Dadurch, daß die Seitenflächen nur zum Teil offene Abschnitte haben, wird die Stabilität der Teile beim Herstellungsprozeß, insbesondere beim Druck- oder Schleudertränken, wesentlich erhöht.
- Beim Einpressen des Metalls können wegen der etwa gleich langen Tränkwege verkürzte Tränkzeiten und niedrige Drücke angewendet werden, wodurch auch eine geringere Belastung der Keramikkörper erfolgt.

Vorzugsweise bezieht sich die Erfindung auf Vielschichtkondensatoren, sie ist aber auch bei Kaltleitern oder Varistoren anwendbar.

Die Formulierung, wonach "im Volumen der Hohlräume verteilt Keramikpartikel enthalten sind", schließt sowohl einzelne Partikel ein, die als Stützelemente dienen, als auch ein poröses Gerüst, dessen Poren miteinander über das gesamte Volumen hinweg verbunden sind, so daß das eingepreßte flüssige Metall in Jedem Fall vollständig eindringen kann.

Der Begriff "keramisches Material mit dielektrischen oder halbleitenden Eigenschaften" schließt insbesondere auch ferroelektrisches, dielektrisches Material mit Perovskitstruktur ein, zum Beispiel vorzugsweise Titanate der Erdalkalien, insbesondere des Bariums und auch Mischtitanate, bei denen Barium durch andere Erdalkalien oder Magnesium substituiert ist und/oder bei denen das Titan beispielsweise durch Zinn substituiert ist. Das dielektrische Material mit Perowskitstruktur kann mit Zusatzstoffen, wie z.B. Antimon, Wismut oder Lanthan oder seltenen Erdmetallen oder auch mit Kupfer, Eisen dotiert sein, so daß höhere Werte der Dielektrizitätskonstanten oder verbesserte Kaltleitereigenschaften (PTC-Eigenschaften) resultieren oder andere elektrische Eigenschaften, wie z.B. deren Temperaturabhängigkeit oder der Verlustfaktor entsprechend den gewünschten Erfordernissen variiert werden. Ferner schließt obiger Begriff auch die hinreichend bekannten Materialien für Varistoren ein. Letztere sind Widerstände, deren Widerstandswert von der anliegenden Spannung abhängig ist, die auch als Voltage Dependent Resistors (VDR) bezeichnet werden und die als Hauptbestandteil Zinkoxid enthalten.

Die Erfindung wird nachfolgend anhand eines in den beigefügten Figuren dargestellten Ausführungsbeispieles für einen Vielschichtkondensator näher erläutert.

Es zeigen:

FIG 1    den monolithischen Keramikkörper vor dem Anbringen der Kontaktierungen und vor der Füllung der Hohlräume mit Metall;

FIG 2    einen fertigen Vielschichtkondensator in Schnittdarstellung längs der Linie II-II in Fig. 1;

FIG 3    einen Schnitt längs der Linie III - III in FIG 2;

FIG 4    einen Schnitt längs der Linie IV - IV in FIG 1;

FIG 5    einen Schnitt längs der Linie V - V in FIG 1;

FIG 6    einen Schnitt längs der Linie VI - VI in FIG 2;

FIG 7    einen Schnitt längs der Linie VII - VII in FIG 2.

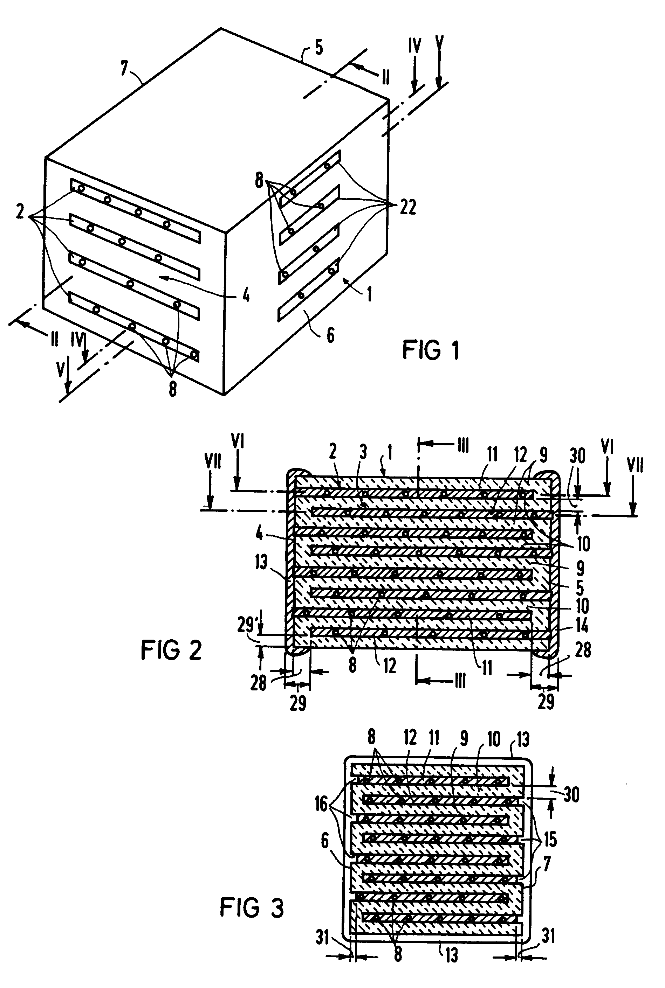

FIG 1 zeigt einen gesinterten monolithischen Keramikkörper 1, der von Hohlräumen 2, 3 durchsetzt ist. Die Hohlräume 2 sind zur Stirnfläche 4 und die Hohlräume 3 sind zur Stirnfläche 5 des Keramikkörpers 1 hin offen; beide Hohlräume 2 und 3 sind aber auch alternierend im Mittenbereich zu den Seitenflächen 6 und 7 hin offen und bilden so jeweils seitliche Tränköffnungen 22 und 23. Die Keramikpartikel 8 sind über die Volumina der Hohlräume 2 und 3 verteilt, und zwar im Sinne der obigen Erläuterung, und dienen als Stützelemente. Der monolithische Keramikkörper 1 ist aus Keramikschichten 9 und 10 zusammengesintert, die als Dielektrikum dienen.

In FIG 1 ist der Keramikkörper 1 in seinem Zustand nach dem Sintern, jedoch vor dem Anbringen der Kontaktierungen an den Stirnseiten 4 und 5 und vor dem Füllen der Hohlräume 2 und 3 über die Tränköffnungen 22 und 23 mit niedrig schmelzendem Metall, gezeigt. Aufgrund der massiven Bereiche in den Randbereichen des quaderförmigen Keramikkörpers 1 ergibt sich eine gute Stabilität der Teile bei der Handhabung bei gleichzeitiger optimaler Zugänglichkeit der Hohlräume 2 und 3 über die Öffnungen 22 und 23 während des Druckbzw. Schleudertränkens.

FIG 2 zeigt einen fertigen Vielschichtkondensator im Schnitt. Man erkennt den aus den Keramikschichten 9 und 10 zusammengesinterten monolithischen Keramikkörper 1, dessen Hohlräume 2, 3 mit den Metallfüllungen 11 und 12 gefüllt sind. Alternierend von Lage zu Lage enden diese Metallfüllungen 11 und 12 an einander gegenüberliegenden Stirnflächen 4 und 5 und sind dort durch die Kontaktierungen 13 und 14 miteinander elektrisch verbunden.

Die Kontaktierungen 13 und 14 können, wie in den USA-Patentschriften 3 679 950 und 4 071 880 gezeigt, nur die Stirnflächen 4 und 5 bedecken; sie sind selbst lötfähig oder weisen eine lötfähige weitere Schicht auf, an die z.B. Stromzuführungsdrähte angelötet werden können. Es ist aber auch möglich und in vieler Weise vorteilhaft, wenn die Kontaktierungen 13 und 14 nicht nur an den Stirnflächen 4 und 5, sondern auch auf die Seitenflächen 6 und 7 herumreichend ausgebildet sind. Dies ist beispielsweise bei sogenannten Chip-Bauelementen zur Verwendung bei der SMD-Technologie vorteilhaft, weil diese dann auf eine mit gedruckten Leiterbahnen versehenen Schaltplatte unmittelbar aufgelötet werden können.

Für diesen Fall reichen die Kontaktierungen 13 und 14 soweit auf die angrenzenden Seitenflächen 6 und 7 herum, daß eine Auflagefläche mit der Breite 28 resultiert. Diese Breite ist so zu bemessen, daß sie an die Flächen, an denen der Chip-Kondensator anzulöten ist, angepaßt sind.

Der Abstand 29 bzw. 29' zwischen dem Ende der Kontaktierungen 13 und 14 und den Enden der auf entgegengesetztem Potential befind- lichen Metallfüllungen 12 bzw. 11 ist dabei immer mindestens so groß wie der Abstand 30 zwischen zwei Metallbelegungen 11 und 12, so daß die notwendigen Isolationsabstände gewährleistet sind.

In FIG 3, die einen Schnitt längs der Linie III - III in FIG 2 darstellt, ist zu erkennen, daß im Bereich der Öffnungen 22 und 23 von Metall freie Räume 16 bzw. 15 vorhanden sind, die die Isolation zwischen zwei Metallfüllungen 11 und 12 erhöhen, und zwar dadurch, daß die Tiefe 31 dieser von Metall freien Räume 15 und 16 zu der Dicke 30 zwischen zwei Metallfüllungen 11 und 12 hinzukommt.

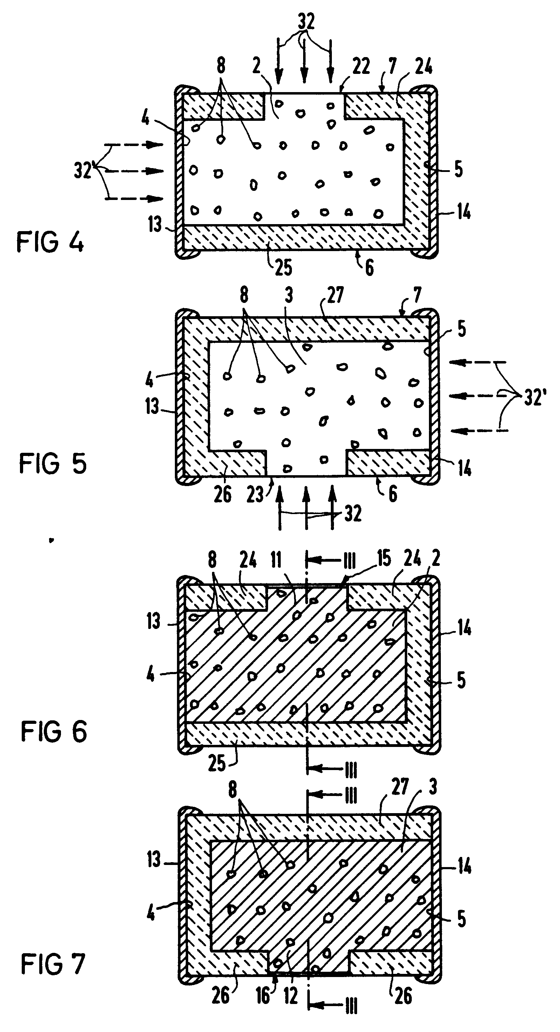

Die FIG 4, 5, 6 und 7, die Schnitte längs den Linien IV - IV und V - V in FIG 1 bzw. VI - VI und VII - VII in FIG 2 darstellen, erläutern schematisch den Prozeß des Einpressens der niedrig schmelzenden, benetzenden Metallschmelze.

In den FIG 4 und 5 erkennt man die einzelnen schon beschriebenen Teile, wobei die Keramikpartikel 8 in den zwischen den Keramikschichten 10 und 9 befindlichen Hohlräumen 2 und 3 zu sehen sind. Im einzelnen ist erkennbar, daß die Hohlräume 2 und 3 außer durch die alternierenden stirnseitigen Zugänge, die von den Kontaktierungen 13 bzw. 14 bedeckt sind, auch über die von Lage zu Lage seitlich alternierenden Öffnungen 22 und 23 zugänglich sind. Ansonsten sind die Hohlräume 2 und 3 von massiven seitlichen Randbereichen 24 und 25 bzw. 26 und 27 begrenzt, deren Breite variieren kann.

Durch eine derartige Begrenzung der Hohlräume 2 und 3 ist sichergestellt, daß jedes der beiden Hohlraumsysteme im Keramikkörper 1 von gegenüberliegenden Seiten getränkt wird. Dadurch wird die Gefahr einer Außenüberbrückung nicht zusammenhängender Schichten, d.h. ein Kurzschluß, vermieden. Außerdem stärken die massiven Randbereiche 24 bis 27 den Zusammenhalt und die Festigkeit des Keramikkörpers 1, so daß beim Druck- oder Schleuderertränken mit der Metallschmelze keine Bruchneigung der Teile zu befürchten ist.

Die Metallschmelze wird durch die Öffnungen 22 und 23 in die Hohlräume 2 und 3 entsprechend der durch die Pfeile 32 gegebenen Richtung hineingepreßt. Je nachdem, ob die Kontaktierungen 13 und 14 porös oder dicht ausgebildet sind, ist auch weiterhin über die strichierten Pfeile 32' ein Tränkweg vorhanden, wobei in jedem Fall die Tränkung vorwiegend über die seitlichen Öffnungen erfolgt.

In den FIG 6 und 7 sind die mit bereits erstarrtem Metall gefüllten Hohlräume 2 und 3 zu erkennen, wobei die durch die Kontraktion des erstarrenden Metalles entstandenen, von Metall freien Räume 15 und 16 mit der Tiefe 31 deutlich zu erkennen sind.

In weiteren Ausführungsbeispielen sind die alternierenden Tränköffnungen 22 und 23 für die Hohlräume 2 und 3 gegeneinander lateral versetzt. Es können auch mehrere Öffnungen nebeneinander durch Massivkeramikbarrieren getrennt sein, wobei die Gesamtlänge der Öffnungen 10 bis 80 % der Seitenlänge beträgt. Es muß aber gewährleistet sein, daß die Kontaktierungen in keinem Fall die Metallfüllungen berühren.

## Patentansprüche

1. Füllschichtbauteil, insbesondere elektrischer Vielschichtkondensator, -kaltleiter oder -varistor, mit den Merkmalen:

a) Ein gesinterter, quaderförmiger Körper (1) hat Schichten (9, 10) aus keramischem Material mit dielektrischen oder halbleitenden Eigenschaften,

b) zwischen den Schichten (9, 10) befinden sich Bereiche (2, 3) mit Metallfüllungen (11, 12), die alternierend von Schicht zu Schicht (9, 10) zu einander gegenüberliegenden Stirnflächen (4, 5) und wenigstens teilweise zu den angrenzenden Seitenflächen (6, 7) des quaderförmigen Körpers (1) ausgedehnt und mit Keramikpartikeln (8) als Stützelement durchsetzt sind,

c) die Metallfüllungen (11, 12) bestehen aus einem Metall oder einer Metallegierung, dessen bzw. deren Schmelztemperatur erheblich niedriger ist als die für die Sinterung des quaderförmigen Körpers (1) aus keramischem Material erforderliche Temperatur,

d) an den Stirnflächen (4, 5) und auch auf die Seitenflächen (6, 7) herumreichend sind Kontaktierungen (13, 14) vorhanden, die jeweils die Metallfüllungen (11, 12) miteinander elektrisch leitend verbinden und selbst oder durch eine weitere Metallauflage lötfähig sind,

**gekennzeichnet durch** die weiteren Merkmale:

e) die Bereiche (2, 3) mit den Metallfüllungen (11, 12) sind nur im mittleren Abschnitt der Seitenflächen (6, 7) des quaderförmigen Körpers (1) bis nach außen ausgedehnt, so daß die Kontaktierungen (13, 14) an den Seitenflächen (6, 7) die Metallfüllungen (11, 12) nicht berühren,

f) die Metallfüllungen (11, 12) bestehen aus einem Metall oder einer Metallegierung mit der Eigenschaft, im flüssigen Zustand die Flächen der Schichten (9, 10) aus keramischem Material in den Hohlräumen (2, 3) zu benetzen.

2. Füllschichtbauteil nach Anspruch 1, **dadurch gekennzeichnet,** daß die Bereiche (2, 3) mit den Metallfüllungen (11, 12) zwischen aufeinanderfolgenden Schichten aus keramischem Material alternierend bis zu jeweils einer der Seitenflächen (6, 7) ausgedehnt sind.

3. Füllschichtbauteil nach Anspruch 1, **dadurch gekennzeichnet,** daß die Länge der Abschnitte (22, 23) an den Seitenflächen des quaderförmigen Körpers (1), in dem die Bereiche (2, 3) mit den Metallfüllungen (11, 12) bis nach außen verlaufen, 10 bis 80 % der Gesamtlänge der Seitenflächen (6, 7) beträgt.

4. Füllschichtbauteil nach Anspruch 3, **dadurch gekennzeichnet,** daß die Abschnitte (22, 23) durch Massivkeramikbarrieren voneinander getrennt sind.

5. Füllschichtbauteil nach Anspruch 1, **dadurch gekennzeichnet,** daß die Metallfüllungen (11, 12) aus einer Blei-Indium-Legierung mit einem Indiumanteil von gleich oder größer als 0,5 Gew.-%, insbesondere 2,5 bis 20 Gew.-%, bestehen.

6. Füllschichtbauteil nach Anspruch 1, **dadurch gekennzeichnet,** daß die Metallfüllungen (11, 12) aus einer Blei-Silber-Indium-Legierung mit wenigstens 0,5 Gew.-% Indium und insgesamt bis 20 Gew.-% Silber und Indium bestehen.

7. Füllschichtbauteil nach Anspruch 1, **dadurch gekennzeichnet,** daß die Metallfüllungen (11, 12) aus Blei-Zinn-Indium-, Kupfer-Indium oder Silber-Indium-Legierungen bestehen.

8. Füllschichtbauteil nach Anspruch 1, **dadurch gekennzeichnet,** daß die Kontaktierungen (13, 14) aus Nickel oder Legierungen mit einem hohen Nickelanteil bestehen.

9. Füllschichtbauteil nach Anspruch 1, **dadurch gekennzeichnet,** daß die Kontaktierungen (13, 14) aus Silber oder Legierungen mit einem hohen Silberanteil bestehen.

10. Füllschichtbauteil nach Anspruch 9, **dadurch gekennzeichnet,** daß die Kontaktierungen (4, 5) auf Silberbasis durch eine Doppelschicht gebildet sind, deren innere Schicht an die Metallfüllungen (11, 12) anbindet und deren äußere Schicht ablegierungsbeständig ist.

11. Füllschichtbauteil nach Anspruch 1, **dadurch gekennzeichnet,** daß die Kontaktierungen (13, 14) durch Bedrucken, z.B. Siebdruck, durch Tauchen, galvanisch oder chemisch, mittels Metallspritzverfahren oder durch Oberflächenbeschichtungsverfahren aus der Gasphase, z.B. Sputtern, aufgebracht sind.

12. Füllschichtbauteil nach Anspruch 1, **dadurch gekennzeichnet,** daß wenigstens die von Kontaktierungen (13, 14) freien Bereiche der Seitenflächen (6, 7) mit elektrisch isolierendem und feuchtedichtem Material bedeckt sind.

13. Verfahren zur Herstellung eines Füllschichtbauteils, insbesondere eines elektrischen Vielschichtkondensators, nach Anspruch 1 oder einem der Ansprüche 2 bis 12, mit folgenden Verfahrensschritten:

a) Es werden 0,03 bis 0,1 mm dicke Schichten (17, 18), deren Breite (26) und Länge (27) je ein Vielfaches der Breite und Länge der späteren Keramikkörper (1) betragen, aus einer Suspension, die dielektrisches Material in feiner Verteilung enthält, hergestellt und getrocknet,

b) auf diese Schichten (17, 18) wird in Form von abgegrenzten Bereichen (19, 20) in bestimmter Anordnung und in einer Dicke von 0,005 bis 0,02 mm eine Suspension aufgetragen (z.B. aufgedruckt) und eingetrocknet, die beim späteren Sintern gemäß Verfahrensschritt e) entweichende Bestandteile (Oxide, Karbonate, Kohlenstoff oder Ruß) und Keramikpartikel enthält, die beim späteren Sintern gemäß Verfahrensschritt e) im wesentlichen unverändert bleiben,

c) aus einer Vielzahl solcher Schichten (17, 18) wird ein Stapel (22) gebildet, in welchem sich die Suspensionsbereiche (19, 20) in großen Teilbereichen (21) überlappen und der gegebenenfalls oberhalb und/oder unterhalb mit von Suspensionsbereichen freien, als Decklagen dienenden Suspensionsschichten versehen ist,

d) der Stapel (22) wird durch einen Preßvorgang verdichtet und anschließend längs von Schnittlinien (23, 24) in Längs- und in Querrichtung zerteilt,

e) der verdichtete Stapel (22) oder die daraus entstandenen Einzelkörper werden mit entsprechendem Aufheiz- und Abkühlverlauf bei Temperaturen von 1000 °C oder höher gesintert,

f) die gesinterten Keramikkörper (1), die Hohlräume (2, 3) mit offenen Abschnitten (22, 23) wenigstens an den Seitenflächen (6, 7) aufweisen, werden an den Stirnflächen (4, 5) mit Kontaktierungen (13, 14) versehen,

g) die mit Kontaktierungen (13, 14) versehenen Keramikkörper (1) werden in einem Autoklaven, gegebenenfalls nach vorheriger Evakuierung, in eine Metallschmelze getaucht, welche anschließend durch Überdruck in die Hohlräume des Keramikkörpers eingepreßt wird, und werden anschließend oberhalb der Metallschmelze abgekühlt, wobei der Überdruck auf Normaldruck reduziert ist, oder

die mit Kontaktierungen versehenen Körper aus keramischem Material werden in einer Zentrifuge mit der Metallschmelze beaufschlagt, wobei das Metall durch Einwirkung der Zentrifugalkräfte in die Hohlräume der Körper aus keramischem Material gepreßt wird,

**gekennzeichnet durch** die weiteren Merkmale:

- im Verfahrensschritt f) werden die Kontaktierungen (13, 14) auf insbesondere Nickel- oder Silberbasis durch Bedrukken, z.B. Siebdruck, durch chemische oder galvanische Abscheidung, mittels Tauchverfahren, mittels Metallspritzverfahren oder durch Oberflächenbeschichtungsverfahren aus der Gasphase, z.B. Sputtern, aufgetragen,
- im Verfahrensschritt g) erfolgt das Einpressen eines flüssigen Metalles, das die Flächen der Keramikschichten (9, 10) in den Hohlräumen (2, 3) benetzt, vorwiegend durch die offenen Abschnitte (22, 23) an den Seitenflächen (6, 7) des Keramikkörpers (1), wodurch Bereiche mit Metallfüllungen gebildet werden.

## Claims

1. Filler layer component, in particular electrical multi-layer capacitor, thermistor or varistor, having the features:

   a) a sintered, parallelepiped-shaped body (1) has layers (9, 10) of ceramic material with dielectric or semi-conducting properties,

   b) located between the layers (9, 10) there are areas (2, 3) with metal fillings (11, 12) which are extended alternately from layer to layer (9, 10) to opposing faces (4, 5) and at least partly to the adjacent side faces (6, 7) of the parallelepiped-shaped body (1) and are permeated with ceramic particles (8) as supporting element,

   c) the metal fillings (11, 12) consist of a metal or a metal alloy, the melting temperature of which is considerably lower than the temperature required for sintering the parallelepiped-shaped body (1) of ceramic material,

   d) on the faces (4, 5) and also reaching round onto the side faces (6, 7) there are contacts (13, 14) which in each case connect the metal fillings (11, 12) with each other in an electrically conductive manner and are capable of being brazed themselves or by means of a further metal plating,

   characterised by the further features:

   e) the areas (2, 3) with the metal fillings (11, 12) are extended as far as the exterior only in the central section of the side faces (6, 7) of the parallelepipedshaped body (1) so that the contacts (13, 14) on the side faces (6, 7) do not touch the metal fillings (11, 12),

   f) the metal fillings (11, 12) consist of a metal or a metal alloy with the property, in the fluid state, of wetting the surfaces of the layers (9, 10) of ceramic material in the cavities (2, 3).

2. Filler layer component according to claim 1, characterised in that the areas (2, 3) with the metal fillings (11, 12) are extended between successive layers of ceramic material alternately as far as, in each case, one of the side faces (6, 7).

3. Filler layer component according to claim 1, characterised in that the length of the sections (22, 23) on the side faces of the parallelepiped-shaped body (1), in which the areas (2, 3) with the metal fillings (11, 12) run as far as the exterior, amounts to 10 to 80 % of the whole length of the side faces (6, 7).

4. Filler layer component according to claim 3, characterised in that the sections (22, 23) are separated from each other by means of solid ceramic barriers.

5. Filler layer component according to claim 1, characterised in that the metal fillings (11, 12) consist of a lead-indium alloy with an indium content which is equal to or greater than 0.5 % by weight, in particular 2.5 to 20 % by weight.

6. Filler layer component according to claim 1, characterised in that the metal fillings (11, 12) consist of a lead-silver-indium alloy with at least 0.5 % by weight indium and in total up to 20 % by weight silver and indium.

7. Filler layer component according to claim 1, characterised in that the metal fillings (11, 12) consist of lead-tin-indium, copper-indium or silverindium alloys.

8. Filler layer component according to claim 1, characterised in that the contacts (13, 14) consist of nickel or alloys with a high nickel content.

9. Filler layer component according to claim 1, characterised in that the contacts (13, 14) consist of silver or alloys with a high silver content.

10. Filler layer component according to claim 9, characterised in that the contacts (4, 5) are formed on a silver base by means of a double layer, the inner layer of which binds to the metal fillings (11, 12) and the outer layer of which is resistant to detaching by alloying.

11. Filler layer component according to claim 1, characterised in that the contacts (13, 14) are applied by printing, for example screen printing, by dipping, galvanically or chemically, by means of metal spraying methods or by means of methods of surface coating from the gas phase, for example sputtering.

12. Filler layer component according to claim 1, characterised in that at least the areas of the side faces (6, 7) which are free of contacts (13, 14) are covered with electrically insulating and moisture-tight material.

13. Method for producing a filler layer component, in particular an electrical multi-layer capacitor, according to claim 1 or one of the claims 2 to 12, having the following method steps:

a) 0.03 to 0.1 mm thick layers (17, 18), the width (26) and length (27) of which, in each case, amount to a multiple of the width and length of the subsequent ceramic bodies (1), are produced and dried from a suspension which contains dielectric material in fine distribution,

b) a suspension is applied (for example, imprinted) and dried onto these layers (17, 18) in the form of delimited areas (19, 20) in a certain arrangement and with a thickness of 0.005 to 0.02 mm, which suspension contains constituents (oxides, carbonates, carbon or carbon black), which escape in the case of subsequent sintering according to method step e), and ceramic particles, which in the case of subsequent sintering according to method step e) remain substantially unchanged,

c) a stack (22) is formed from a plurality of such layers (17, 18), in which stack the suspension areas (19, 20) overlap in great partial areas (21) and which stack, if applicable, is provided, above and/or below, with suspension layers which are free of suspension areas and which are used as covering layers,

d) the stack (22) is compressed by a pressing action and subsequently divided along intersection lines (23, 24) in the longitudinal and transverse direction,

e) the compressed stack (22) or the resultant individual bodies are sintered with suitable heating and cooling course at temperatures of 1000° C or above,

f) the sintered ceramic bodies (1), which have cavities (2, 3) with open sections (22, 23) at least on the side faces (6, 7), are provided with contacts (13, 14) on the faces (4, 5),

g) the ceramic bodies (1), which are provided with contacts (13, 14), are dipped, in an autoclave, if applicable after previous evacuation, into a molten metal, which is subsequently pressed by excess pressure into the cavities of the ceramic body, and are subsequently cooled above the molten metal, with the excess pressure being reduced to normal pressure, or the molten metal acts upon the bodies of ceramic material, provided with contacts, in a centrifuge, with the metal being pressed, as a result of action of the centrifugal forces, into the cavities of the bodies of ceramic material, characterised by the further features:

- in method step f) the contacts (13, 14), in particular on a nickel or silver base, are applied by printing, for example screen printing, by chemical or galvanic precipitation, by means of dipping methods, by means of metal spraying or by methods of surface coating from the gas phase, for example sputtering,

- in method step g) the pressing-in of a fluid metal, which wets the surfaces of the ceramic layers (9, 10) in the cavities (2, 3), mainly occurs through the open sections (22, 23) on the side faces (6, 7) of the ceramic body (1), whereby areas with metal fillings are formed.

**Revendications**

1. Élément stratifié garni, notamment condensateur, thermistor ou varistor électrique à couches multiples, ayant les caractéristiques suivantes :

a) un corps (1) fritté parallélépipédique a des couches (9,10) en matériau céramique à propriétés diélectriques ou semiconductrices,

b) entre les couches (9,10) se trouvent des régions (2,3) à garnissages métalliques (11,12) qui s'étendent alternativement d'une couche à l'autre (9,10) vers des faces frontales (4,5) opposées et au moins en partie vers les faces latérales (6,7) adjacentes du corps (1) parallélépipédique et qui sont traversées par des particules (8) de céramique servant d'éléments d'appui,

c) les garnissages métalliques (11,12) sont en un métal ou en un alliage métallique dont le point de fusion est considérablement plus bas que la température nécessaire au frittage du corps (1) parallélépipédique en matériau céramique,

d) tout autour des faces frontales (4,5) et également des faces latérales (6,7) sont prévus des contacts (13,14) qui sont reliés de manière électriquement conductrice entre eux par les garnissages métalliques (11,12) et qui peuvent être soudés par eux-mêmes ou par un dépôt métallique supplémentaire,

caractérisé par les caractéristiques supplémentaires suivantes :

e) les régions (2,3) ayant les garnissages métalliques (11, 12) ne s'étendent jusqu'à l'extérieur que dans la partie centrale des faces latérales (6,7) du corps (1) parallélépipédique, de sorte que les contacts (13,14) sur les faces latérales (6,7) ne touchent pas les garnissages métalliques (11,12),

f) les garnissages métalliques (11,12) sont en un métal ou un alliage métallique ayant la propriété de mouiller à l'état liquide les faces des couches (9,10) en matériau céramique dans les intervalles (2,3).

2. Élément stratifié garni suivant la revendication 1, carctérisé en ce que les régions (2,3) ayant les garnissages métalliques (11,12)entre des couches en matériau céramique successives s'étendent alternativement jusqu'à l'une des faces latérales (6,7).

3. Élément stratifié garni suivant la revendication 1, caractérisé en ce que la longueur des parties (22,23) sur les faces latérales du corps (1) parallélépipédique, où les régions (2,3) ayant les garnissages métalliques (11,12) s'étendent jusqu'à l'extérieur, représente de 10 à 80 % de la longueur totale des faces latérales (6,7).

4. Élément stratifié garni suivant la revendication 3, caractérisé en ce que les parties (22,23) sont séparées l'une de l'autre par des barrières pleines en céramique.

5. Élément stratifié garni suivant la revendication 1, caractérisé en ce que les garnissages métalliques (11,12) sont en un alliage de plomb et d'indium ayant une proportion d'indium égale ou supérieure à 0,5 % en poids, notamment de 2,5 à 20 % en poids.

6. Élément stratifié garni suivant la revendication 1, caractérisé en ce que les garnissages métalliques (11,12) sont en un alliage de plomb, d'argent et d'indium ayant au moins 0,5 % en poids d'indium et en tout jusqu'à 20 % en poids d'argent et d'indium.

7. Élément stratifié garni suivant la revendication 1, caractérisé en ce que les garnissages métalliques (11,12) sont en alliages de plomb, d'étain et d'indium, de cuivre et d'indium ou d'argent et d'indium.

8. Élément stratifié garni suivant la revendication 1, caractérisé en ce que les contacts (13,14) sont en nickel ou en alliages ayant une grande proportion de nickel.

9. Élément stratifié garni suivant la revendication 1, caractérisé en ce que les contacts (13,14) sont en argent ou en alliages ayant une grande proportion d'argent.

10. Élément stratifié garni suivant la revendication 9, caractérisé en ce que les contacts (4,5) à base d'argent sont formés d'une couche double dont la couche intérieure est liée aux garnissages métalliques (11,12) et dont la couche extérieure résiste à la formation d'un alliage.

11. Élément stratifié garni suivant la revendication 1, caractérisé en ce que les contacts (13,14) sont déposés par impression, par exemple par sérigraphie, par immersion, par électrolyse ou chimiquement au moyen d'un procédé de métallisation au pistolet ou par un procédé de revêtement superficiel en phase gazeuse, par exemple par pulvérisation cathodique.

12. Élément stratifié garni suivant la revendication 1, caractérisé en ce qu'au moins les parties des faces latérales (6,7), qui sont sans contact (13,14), sont revêtues d'un matériau électriquement isolant et étanche à l'humidité.

13. Procédé de fabrication d'un élément stratifié garni, notamment d'un condensateur électrique à couches multiples suivant la revendication 1 ou l'une des revendications 2 à 12, comportant les stades de procédé suivants :

a) on prépare et on fait sécher des couches (17,18) de 0,03 à 0,1 mm d'épaisseur, dont la largeur (26) et la longueur (27) sont chacune un multiple de la largeur et de la longueur du corps (1) céramique ultérieur, à partir d'une suspension qui contient du matériau diélectrique sous forme finement divisée,

b) on dépose (par exemple par impression) et on introduit par séchage sur ces couches (17,18), sous forme de parties (19,20) délimitées suivant une disposition définie et en une épaisseur de 0,005 à 0,02 mm, une suspension qui contient des constituants (oxyde carbonate, carbone ou suie) se dégageant lors du frittage ultérieur suivant le stade de procédé e) et des particules de céramique, lesquelles restent sensiblement inchangées lors du frittage extérieur suivant le stade de procédé e),

c) on forme, à partir d'une multiplicité de ces couches (17, 18) de ce genre, une pile (22) dans laquelle les zones de suspension (19,20) se chevauchent en de grandes zones partielles (21), et qui est éventuellement munie, audessus et/ou en-dessous, de couches de suspension exemptes de zones de suspension et servant de couches de recouvrement,

d) on comprime la pile (22) par un processus de compression et ensuite, on la subdivise le long de lignes de découpe (23,24) en direction longitudinale et transversale,

e) on fritte à des températures de 1000°C ou supérieures à 1000°C la pile (22) comprimée ou les corps individuels qui sont formés à partir de celle-ci avec une courbe de chauffage et de refroidissement adéquate,

f) on munit les corps (1) frittés en céramique, qui comportent des intervalles (2,3) ayant des parties (22,23) ouvertes au moins sur les faces latérales (6,7), de contacts (13,14) sur les faces frontales (4,5),

g) on immerge les corps (1) en céramique munies de contacts (13,14) dans un autoclave, le cas échéant après mise sous vide préalable, dans un bain métallique que l'on introduit ensuite, grâce à une surpression dans les intervalles du corps en céramique, puis on les refroidit au-dessus du bain métallique, la surpression étant réduite à la pression ambiante, ou

on charge les corps en matériau céramique et munis de contacts dans une centrifugeuse avec le bain métallique, le métal étant poussé par l'action des forces centrifuges dans les intervalles des corps en matériau céramique,

caractérisé par les caractéristiques supplémentaires suivantes :

- au stade du procédé f), on dépose les contacts (13,14) notamment à base de nickel ou d'argent par impression, par exemple par sérigraphie, par dépôt par électrolyse ou chimiquement, au moyen d'un procédé d'immersion, au moyen d'un procédé de métallisation au pistolet ou par un procédé de revêtement superficiel en phase gazeuse, par exemple par pulvérisation cathodique,

- au stade de procédé g), on effectue l'introduction d'un métal liquide qui mouille les faces des couches (9,10) céramique dans les intervalles (2,3), de préférence par les parties (22,23) ouvertes des faces latérales (6,7) du corps (1) céramique en formant ainsi des régions ayant des garnissages métalliques.

FIG 1

FIG 2

FIG 3

FIG 4

FIG 5

FIG 6

FIG 7